Europäisches Patentamt

(19) European Patent Office

Office européen des brevets

(11) Publication number: **0 047 188**
**A1**

(12) # EUROPEAN PATENT APPLICATION

(21) Application number: **81304024.3**

(22) Date of filing: **02.09.81**

(51) Int. Cl.³: **H 02 G 3/06**

(30) Priority: **03.09.80 GB 8028398**

(43) Date of publication of application:
**10.03.82 Bulletin 82/10**

(84) Designated Contracting States:
**AT BE CH DE FR GB IT LI LU NL SE**

(71) Applicant: **BICC Limited**
**21, Bloomsbury Street**
**London, WC1B 3QN(GB)**

(72) Inventor: **Hutchison, John Blundell**
**Hillside Cottage Town Well**
**Kingsley Cheshire(GB)**

(74) Representative: **Poole, Michael John et al,**
**BICC Limited Patents Department 38 Wood Lane**
**London, W12 7DX(GB)**

(54) **Electric cable glands and terminations.**

(57) In a gland for a steel-tape armoured cable, the tape grip comprises two annular components 6, 4 arranged to be urged axially towards one another when the gland is tightened. The first annular component 6 comprises an inner sleeve 7, which underlies the end of the tape 2 on the cable, an outer sleeve 8 surrounding and spaced from the inner sleeve and a body 9 connecting them together at one end. The second annular component 4 is radially contractible, (e.g. is slotted) and is dimensioned to be a force fit within the free end of the outer sleeve. The inner surface of the outer sleeve and/or the outer surface of the second annular component are tapered so that when the first and second annular components are urged together the second annular component will be contracted to grip the tape or tapes between itself and the inner sleeve and will become wedged inside the outer sleeve.

Fig. I.

EP 0 047 188 A1

## ELECTRIC CABLE GLANDS AND TERMINATIONS.

This invention relates to glands for terminating electric cables having armouring made of metal (usually steel) tapes, and to the terminations made with them.

The object of the invention is to provide a grip for the end of the metal tape or tapes that is effective, with few parts, is range-taking and in which the cut edges of the tape are protected.

In the gland in accordance with the invention, the tape grip comprises two annular components arranged to be urged axially towards one another when the gland is tightened, namely

(i) a first annular component comprising an inner sleeve, which underlies the end of the tape on the cable in the finished termination, an outer sleeve surrounding and spaced from the inner sleeve and a body connecting the inner and outer sleeves together at one end and

(ii) second annular component which is radially contractible and is dimensioned to be a force fit within the free end of the outer sleeve;

the inner surface of the outer sleeve and/or the outer surface of the second annular component being tapered so that when the first and second

0047188

annular components are urged together the second annular component will be contracted to grip the tape or tapes between itself and the inner sleeve and will become wedged inside the outer sleeve.

Preferably the first annular member is made in one piece from any suitable metal or strong rigid plastics material; when of metal it may be machined  or , if the volume justifies it, extruded.

The second annular member is preferably made contractible by a single slot extending its full length but other means could be used (e.g. a number of slots all, or all but one, of which stop short of one end  (or of the inside surface) of the member).  Preferably the taper is on this member and preferably it comprises two parts, the first part relatively steep (e.g. 40 - 50° semiangle) so that only a small axial movement is needed to bring the tapes into contact with the inner sleeve and the second part much shallower (e.g. 5 - 10° semiangle) to ensure that the parts wedge firmly together (so that they will remain firmly locked on the end of the cable if the gland is subsequently released.)

In the accompanying drawings,

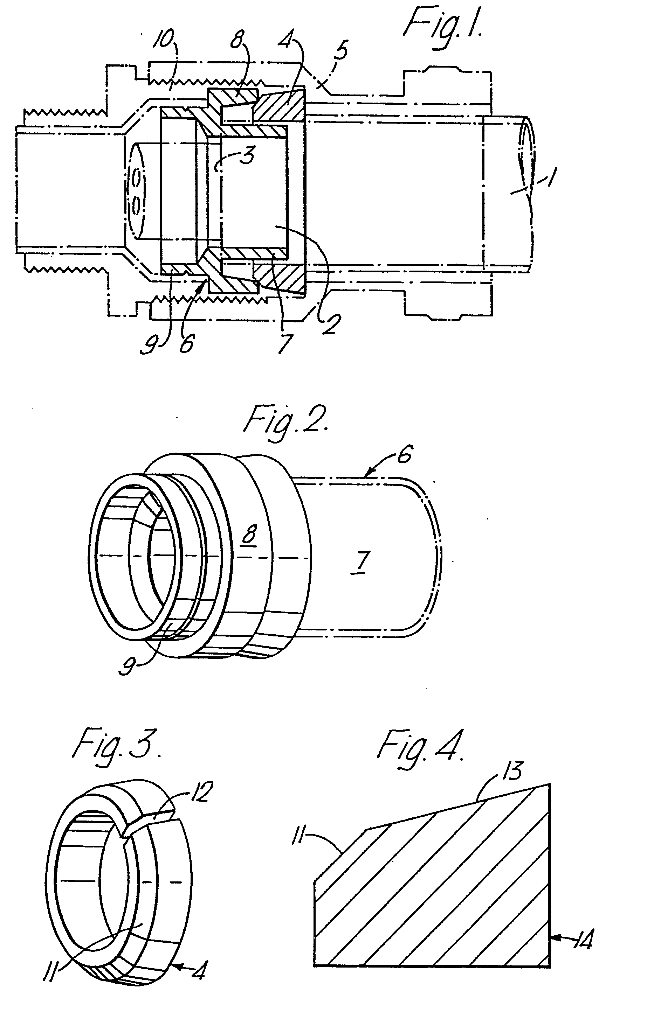

Figure 1 is a cross-section of a grip with the remainder of a termination in accordance with the invention shown in broken lines;

Figures 2 and 3 are perspective sketches of the first and second annular components respectively,

and figure 4 is an enlarged section through the second annular component.

In making the termination shown, the cable end 1 is cut back to expose a length of the armour tape 2 which is simply trimmed to length at 3.

After sliding a second annular component 4 (together, in most cases, with other conventional gland members 5) over the exposed tape, the first annular component 6 is positioned as shown with its inner sleeve 7 underneath the tape, its outer sleeve 8 surrounding and spaced from it, and the end body 9 joining them abutting, or nearly abutting, the cut end 3 of the tape. In this way the end 3 is thereafter protected from contact with personnel or parts of the cable that might be cut by its possibly sharp edges. The second annular component 4 is now brought into position and forced into the outer sleeve of the first, as by screwing together the conventional gland members 5 and 10.

The dimensions of the second annular member are such that the free end of the outer sleeve on the first annular member first engages the steeply tapering face 11, whereby the sleeve rapidly contracts by closing of the slot 12 (figure 3) to squeeze the tape 2 onto the surface of the inner sleeve 7, whereupon the end of the sleeve passes on to the less steeply inclined face 13 which generates effective gripping and locking forces.

- 4 -

CLAIMS

1.      A gland for terminating electric cables having armouring made of metal tapes in which gland the tape grip comprises two annular components arranged to be urged axially towards one another when the gland is tightened, namely

(i) a first annular components comprising an inner sleeve, which underlies the end of the tape on the cable in the finished termination, an outer sleeve surrounding and spaced from the inner sleeve and a body connecting the inner and outer sleeves together at one end and

(ii) second annular component which is radially contractible and is dimensioned to be a force fit within the free end of the outer sleeve;

the inner surface of the outer sleeve and/or the outer surface of the second annular component being tapered so that when the first and second annular components are urged together the second annular component will be contracted to grip the tapes between itself and the inner sleeve and will become wedged inside the outer sleeve.

2.      A gland for terminating electric cables having armouring made of metal tapes in which gland the tape grip comprises two annular components arranged to be urged axially towards one another when the gland is tightened, namely

(i) a first annular component comprising an inner sleeve, which underlies the end of the tape on the

- 5 -

cable in the finished termination, and outer sleeve surrounding and spaced from the inner sleeve and a body connecting the inner and outer sleeves together at one end and

(ii) second annular component which having a single slot extending its full length to make it radially contractible and is dimensioned to be a force fit within the free end of the outer sleeve;

the inner surface of the outer sleeve and/or the outer surface of the second annular component being tapered so that when the first and second annular components are urged together the second annular component will be contracted to grip the tapes between itself and the inner sleeve and will become wedged inside the outer sleeve.

3.      A metal-tape armoured cable termination incorporating the gland claimed in Claim 1 or Claim 2.

0047188

Fig. 1.

Fig. 2.

Fig. 3.

Fig. 4.

## DOCUMENTS CONSIDERED TO BE RELEVANT

| Category | Citation of document with indication, where appropriate, of relevant passages | Relevant to claim |
|---|---|---|
| | US - A - 3 492 410 (KELLY) <br> * Column 3, lines 53-75; column 4, lines 1-14; column 5, lines 32-60; figure 5 * <br> -- | 1-3 |
| | FR - A - 851 712 (DESMET) <br> * Page 2, lines 6-44; figure 1 * <br> -- | 1-3 |
| | GB - A - 850 683 (JOHNSON) <br> * Page 1, line 44 - page 2, line 31; figures 2,3 * <br> -- | 1-3 |
| | US - A - 3 647 934 (HURTT) <br> * Column 3, lines 19-75 * <br> ---- | 1-3 |

**CLASSIFICATION OF THE APPLICATION (Int. Cl.³)**

H 02 G 3/06

**TECHNICAL FIELDS SEARCHED (Int. Cl.³)**

H 02 G 3/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-10-1981 | TIELEMANS |

EPO Form 1503.1  06.78